# EUROPÄISCHE PATENTANMELDUNG

(11) **EP 1 982 914 A2**
(43) Veröffentlichungstag der Anmeldung: **22.10.2008**
(21) Anmeldenummer: 08007263.0
(22) Anmeldetag: 12.04.2008
(51) Int. Cl.: B64C 39/02

(54) **Propellergetriebenes Fluggerät für die Durchführung von taktischen Aufgaben**

(30) Priorität: 18.04.2007 DE 102007018188
(71) Anmelder: LFK-Lenkflugkörpersysteme GmbH, 86529 Schrobenhausen (DE)
(72) Erfinder: Gleich, Peter, 93326 Abensberg (DE); Maier, Franz, 83075 Bad Feilnbach (DE)
(74) Vertreter: Hummel, Adam

(57) **Zusammenfassung**

Verwendung eines Fluggerätes (10), dessen Vortrieb mittels eines von einem batterieberiebenen Elektromotor (30) angetriebenen Propeller (13) erfolgt, als ferngesteuerte "Mini-Drohne", deren Rumpfstruktur (11) als Träger eines über Fernsteuersignale beeinflussbaren Autopiloten (34) über Steckgelenke lösbar mit der Rumpfstruktur verbundenen aerodynamischen Flächen (15) und Ruder (17), sowie von Rudermaschinen (36) einer Sende- und Empfangselektronik (33) und von Fernsehkameras (23) zur Aufnahme des vom Fluggerät überflogenen Geländes dient, welches Fluggerät (10) mittels vorprogrammierter Steuersignale sowie von Lenksignalen in Abhängigkeit der auf eine die Leitstelle (38) übertragenen Fernsehbilder betätigbar ist.

## Beschreibung

Die Erfindung betrifft ein propellergetriebenes Fluggerät für die Durchführung von taktischen Aufgaben.

Die Regulierung von Störfällen erfordert, wie die Erfahrung gezeigt hat, in steigendem Maße sogenannte Kommandoeinsätze einzelner Personen, die möglichst alle für den Einsatz erforderlichen Ausrüstungsgegenstände mit sich führen können. Der Erfolg solcher Einsätze ist bekanntlich direkt abhängig vom Grad der Kenntnis der Geländesituation und der sich dort bewegenden Personen des aktuellen Störfalles.

Hierzu ist ein Kleinflugkörper mit ausklappbaren Trag- und Steuerflächen bekannt, der mittels einem von einem batteriebetriebenen Elektromotor angetriebenen Heckpropeller aus dem Marschflug in einen Schwebeflug durch Änderung der Drehrichtung des Propellers überführbar ist, vgl. DE 10 2004 061 977 A1. Wie die Erfahrung gezeigt hat ist mit einer solchen Ausbildung des Kleinflugkörpers die Transitionsphase "Marschflug-Schwebeflug" schwierig durchzuführen.

Hiervon ausgehend liegt der Erfindung die Aufgabe zu Grunde, die Transitionsphase eines leicht zu transportierenden und zu handhabenden, als ergänzende Bewaffnung für Infanteristen, Grenzschutzbeamte, Antiterrorkämpfer und ähnliche Personen dienenden Fluggerätes zu verbessern sowie dieses selbst zu vereinfachen.

Die Aufgabe ist gemäß der Erfindung gelöst durch die Verwendung eines Fluggerätes, dessen Vortrieb mittels eines von einem batteriebetriebenen Elektromotor angetriebenen frontseitigen Propellers erfolgt, als ferngesteuerte Drohne, mit einer Rumpfstruktur für die lösbare Aufnahme aerodynamischer Flächen und Ruder sowie als Träger für einen eine Dreiachseninertialplattform umfassenden Autopiloten, für mindestens eine TV-bzw. IR-Kamera sowie für den batteriebetriebenen elektromotorischen Antrieb und der Bauteile für eine Funkfernsteuerung, mittels der von einer die aufgenommenen Fernsehbilder darstellenden Leitstelle aus das Fluggerät sowohl für einen Marsch- und einen Schwebeflug als auch für die Transitionsphase steuerbar ist.

Weitere Merkmale der Erfindung ergeben sich aus den Unteransprüchen.

Mit Hilfe der Erfindung wird unter Nutzung der erheblichen Fortschritte in der Miniaturisierung elektronischer und optischer Bauteile sowie des Leichtbaues mittels faserverstärkten bzw. geschäumten Kunststoffen eine "Mini-Drohne" geschaffen, die weitestgehend als in einem Koffer zu transportierender Montagesatz ausgebildet ist und von einer Person an den Einsatzort zu bringen und dort nach ihrem Zusammenbau einsetzbar ist, um eine Positionsbestimmung von zum Beispiel Heckenschützen, Geiselnehmern, Terroristen und ähnlichen Personen durchzuführen und diese bekämpfen zu können. Mit der erfindungsgemäßen "Mini-Drohne" ist also eine hervorragende ergänzende Bewaffnung geschaffen, die sowohl der Aufklärung als auch der Bekämpfung dienen kann und die in Folge ihrer kostengünstigen Ausbildung auch als sogenannte "Einmalwaffe" einsetzbar ist. Hierzu besitzt die "Mini-Drohne" eine Rumpfstruktur, in der ein Elektromotor eingebaut ist, der einen frontseitigen starren oder faltbaren Zug-Propeller antreibt. Außen an der Rumpfstruktur sind vier kartesisch angeordnete Steckflügel angebracht. Durch diese Bauweise wird für den Transport der "Mini-Drohne" die Unterbringung in einem einfachen Transportkoffer ermöglicht. Statt der kartesischen Flügelanordnung kann wahlweise auch eine Anordnung aus nur zwei aerodynamischen Auftriebsflächen gewählt werden. Mit dieser Konfiguration können energieeffizienter größere Reichweiten, zum Beispiel für reine Aufklärungsmissionen erzielt werden.

Zur Steuerung der "Mini-Drohne" sind vier kartesisch angeordnete aerodynamisch wirksame Ruder vorgesehen, die jeweils von einer ebenfalls batteriegespeisten elektrischen Rudermaschine angetrieben sind. Die hierzu erforderlichen vier Rudermaschinen können wie bei klassischen Flugkörperkonzepten voneinander unabhängig angesteuert werden. Die Ruderausschläge für das Rollen, Nicken und Gieren werden durch entsprechendes Überlagern der vier Einzelruderausschläge erzeugt. Auch die Ruder werden wie die aerodynamischen Auftriebsflächen auf die Rumpfstruktur im Bereich der dort angeordneten Rudermaschinen aufgesteckt. Die Ruderflächen sind aber auch an die Auftriebsflächen direkt anlenkbar. Eine alternative Möglichkeit ergibt sich durch eine anklappbare Ausführung der Ruder mittels Gelenken für den Transport der "Mini-Drohne" in dem vorstehend genannten Transportkoffer. In einem solchen Falle werden vor dem Start der "Mini-Drohne" die Ruder ausgeklappt und die Flügel wie bereits erwähnt an der Rumpfstruktur aufgesteckt. Ebenso können die Flügel ausklappbar, z.B. in einer Art Regenschirmprinzip aus Streben und Folie oder Stoff, ausgeführt sein.

Die Lenkung der "Mini-Drohne" erfolgt mittels Funkfernsteuerung von einer einem Operateur zugeordneten Leitstelle aus. Hierbei wird die automatische Lage-(Drehraten) Stabilisierung der "Mini-Drohne" durch eine miniaturisierte DreiAchseninertialplattform, also durch einen vollständig autonom operierenden Autopiloten unterstützt. Der Operateur tätigt mittels der Fernsteuerung lediglich Sollkommando-Eingaben hinsichtlich Position und Positionsänderung der "Mini-Drohne". Der Autopilot sorgt dann autonom für die Ausführung der Positionsbefehle und regelt die Fluglage der "Mini-Drohne" selbstständig. Hierdurch wird die Lenkung und Steuerung der "Mini-Drohne" stark vereinfacht. Darüber hinaus kann der Operateur zu jedem Zeitpunkt und in jeder Phase einer Mission über die Fernsteuerung die "Mini-Drohne" von Hand kommandieren und somit eine autonome vorprogrammierte Mission unterbrechen bzw. wieder herstellen.

In die Rumpfstruktur sind zwei oder mehrere starre oder schwenkbare Mini-Kameras integriert. Mindestens eine davon ist so angeordnet, dass ihr Blickfeld zur Längsachse der Rumpfstruktur ausgerichtet ist. Diese Mini-Kamera ist zum Einen während des Marschfluges der "Mini-Drohne" vorzugsweise auf den Erdboden ausgerichtet, zum anderen kann mit ihr ein azimutaler Bereich um die "Mini-Drohne" aufgeklärt werden, wenn die "Mini-Drohne" auf "stiller Beobachtungsposition" abgesetzt ist. In dieser Funktion steht die "Mini-Drohne" aufrecht auf ihrem Startstützen in abgesetzter Position z.B. auf einem Hausdach, Balkon oder im Gelände und kann über die Fernsteuerung mittels seines Propellerantriebes und seiner Rollsteuerung vom Operateur in beliebige Beobachtungsrichtung gedreht werden. Diese Ausbildung ist besonders vorteilhaft, da während der Beobachtungsphase nur die Kamera in Betrieb ist und daher keinerlei für einen Gegner erkennbare Geräuschsignatur entsteht. Während des Marschfluges kann die Lateral-Kamera auch bei Bedarf durch Veränderung der Rolllage der "Mini-Drohne" in beliebige laterale Winkelpositionen z. B. zur Seite oder nach oben etc. gedreht werden. Die Lateralkamera kann ebenso mittels einer eigenen Rudermaschine vom Operateur per Fernsteuerung relativ zur Flugkörperlängsachse verstellt werden oder über den Autopiloten per Lageregelung gesteuert, in einer konstanten Winkellage relativ zur Erdoberfläche gehalten werden. Statt einer Lateral-Kamera können auch mehrere z.B. unterschiedliche Kameras derart in der Rumpfstruktur angeordnet werden, dass während des Schwebefluges und in der abgesetzten Position der "Mini-Drohne" eine lückenlose Rundumbeobachtung möglich ist. Eine weitere Kamera ist im Heck der Rumpfstruktur angeordnet und blickt während des Schwebefluges nach unten auf das zu beobachtende Objekt am Erdboden. Die Kameras können während einer Mission gleichzeitig oder einzeln vom Operateur angesteuert bzw. abgefragt werden. Die in der Rumpfstruktur installierten Kameras übertragen ihre Bilder über einen Breitband-Datenlink zum Operateur in eine Leitstelle mittels der die "Mini-Drohne" anhand der Kamerabilder durch entsprechende Steuerangaben in die Fernsteuerung gelenkt werden kann. Die hierfür erforderlichen Baugruppen, wie Datenübertragungselektronik, Lenk-/und Regelelektronik, Funkempfänger und Energieversorgung sowie gegebenenfalls eine Miniwirkladung befinden sich ebenfalls in der Rumpfstruktur der "Mini-Drohne".

Die Miniwirkladungen können Spreng/Splitterladungen aber auch nicht letale Wirkmittel wie Blend/Knallladungen oder Kampfgase sein.

Die Erfindung ist nachfolgend anhand eines in der Zeichnung mehr oder minder schematisch dargestellten Ausführungsbeispieles beschrieben. Es zeigen:
- Fig. 1: Eine perspektivische Darstellung einer "Mini-Drohne" gemäß der Erfindung und

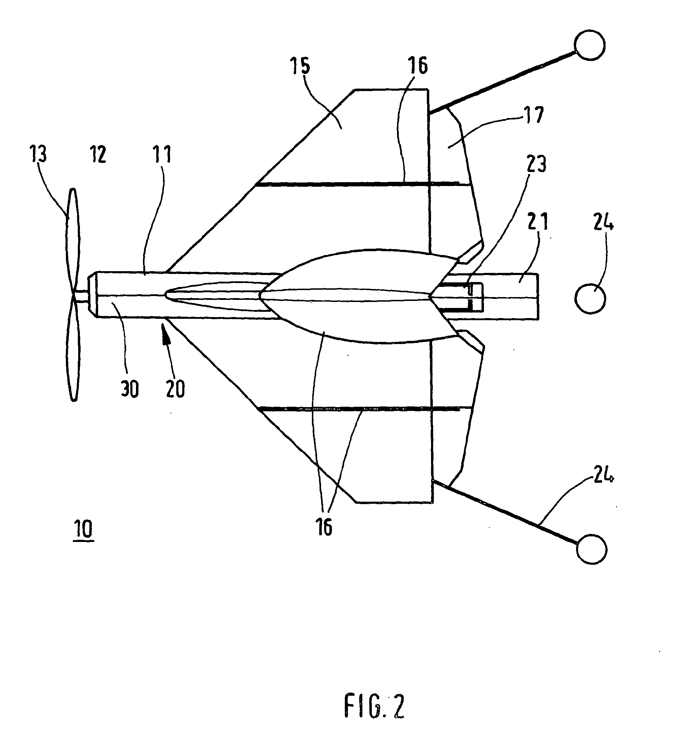

- Fig. 2: eine Draufsicht auf die "Mini-Drohne"

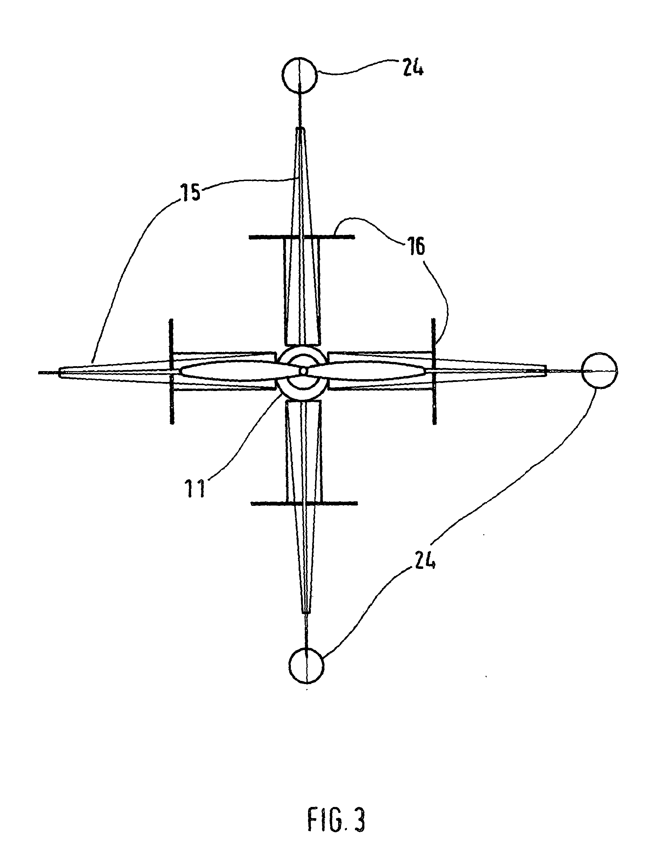

- Fig. 3: eine Ansicht von Hinten auf die "Mini-Drohne" gemäß Fig. 1 und
- Fig. 4: ein Funktionsdiagramm der Fernsteuerung für den Betrieb der "Mini-Drohne" gemäß Fig. 1.

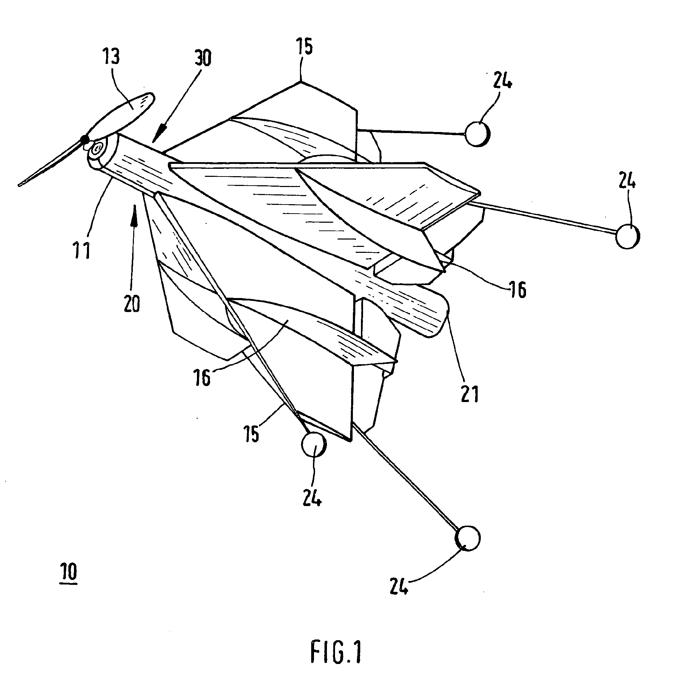

Eine nach Art eines Modellflugkörpers ausgebildete in Fig. 1 insgesamt mit der Bezugsziffer 10 bezeichnete Drohne ("Mini-Drohne") umfasst eine aus faserverstärkten oder geschäumten Kunststoffen bestehende rohrförmige Rumpfstruktur 11, dessen vordere Stirnseite eine mittels eines Lagers 12 gelagerte Luftschraube 13 trägt, die als Faltluftschraube ausgebildet ist. Die Rumpfstruktur 11 ist der Träger für im Mittelbereich einsteckbar ausgebildete kartesisch angeordnete aerodynamische Flächen 15 -die rechtwinklig dazu angeordnete Leitfläche 16 tragen-, und für nahe dem Heck 21 befindliche Ruder 17.

Anstelle von jeweils vierfach angeordneten Flächen und Rudern sind auch zweifach angeordnete Flächen und Ruder möglich. Bei kartesisch angeordneten Flächen wird die Drohne nach dem kartesischen Prinzip "Skid to Turn" gesteuert. Bei nur zweifach angeordneten Flächen wird die Drohne nach dem klassischen Steuerungsverfahren für Flächenflugzeuge "Bank to turn" gesteuert. Beide Steuerungsverfahren sind im Autopiloten für die autonome Lagereglung - wie noch zu beschreiben ist - abgelegt und können je nach gewählter Flächenkonfiguration über die noch zu beschreibende Leitstelle abgerufen werden.

Mit jedem Ruder 17 steht eine nicht näher dargestellte Rudermaschine 23 in Wirkverbindung, die im mittleren Bereich der Rumpfstruktur angeordnet sind. Der vordere Bereich der Rumpfstruktur umfasst einen als Elektromotor ausgebildeten Antriebsmotor 30 für den Antrieb der bei 12 gelagerten Luftschraube 13 sowie eine als Stromversorgungsquelle dienende nicht dargestellte Batterie. Der vor den Flächen 15 liegende Abschnitt 20 (Figur 1) der Rumpfstruktur 11 und das Heck 21 tragen nicht dargestellte miniaturisierte TV-Infrarot- oder ähnliche Kameras für die optische Abtastung des Geländes, über das die Drohne geflogen wird. Hierbei dienen die Kameras der lateralen Abtastung des überflogenen Geländes und die im Heck 21 befindliche Kamera der Abtastung des Geländes unterhalb der Drohne, wenn diese sich im Schwebeflug befindet. Die Stromversorgung der Kameras erfolgt ebenfalls aus einer bordeigenen Batterie.

Die Rumpfstruktur 11 ist ferner Träger für die das ferngesteuerte Fliegen der Drohne notwendigen elektronischen und physikalischen Regel - und Steuerungselemente, wie Empfänger/Sender, Autopilot mit GPS-gestützten Inertialsystem, mit Flugbahnrechner und Flugzustandsregler, sowie das notwendige Ruderstellsystem zum Betätigen der Ruder 17. Auch hier erfolgt die Stromversorgung aus der bordeigenen Batterie.
Die Steuerung der vorstehend beschriebenen Drohne 10 erfolgt über eine von einem Operateur betätigbaren bodenseitigen Leitstelle 22, auf die die von den Kameras aufgenommenen Geländebilder übertragen und dort auf einem Display für den die Drohne steuernden Operator dargestellt werden.

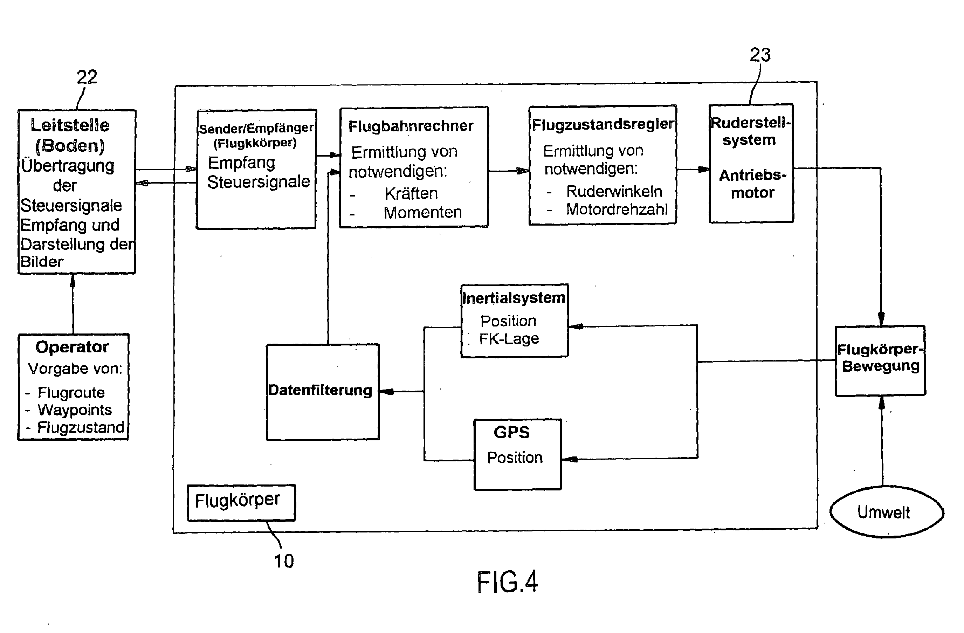

Die jeweiligen Abläufe einer Marsch- und Schwebeflugmission der vorstehend beschriebenen Drohne, sind nunmehr anhand des Funktionsschemas in Figur 4 beschrieben.

Der Operateur wählt die gewünschte Mission und legt entweder eine erforderliche Flugroute anhand von Wegpunkten durch eine vorab durchgeführte Missionsplanung fest, oder steuert den Flugkörper anhand des von Fk übertragenen Bildes durch Eingaben in der Steuerkonsole der Leitstelle. Die Leitstelle überträgt die Steuersignale und weitere Kommandos (Positionskommandos bzw. Geschwindigkeitskommandos, Kameraschwenkwinkel und weitere Aktionen) per Funk an das Funkmodul des Flugkörpers. Im Flugkörper ermittelt der Flugbahnrechner (als Teil des Autopiloten) die notwendigen Kräfte und Momente um die geforderte Flugbahn zu erreichen. Der Flugstandsregler (als Teil des Autopiloten) ermittelt die notwendigen Ruderwinkel und die notwendige Motordrehzahl. Diese Ruderwinkelkommandos und Drehzahlkommandos werden vom Ruderstellsystem und Antriebsmotor ausgeführt und ergeben so die Flugkörperbewegung.

Mittels Inertialsystem, GPS und Datenfilterung wird die Flugkörperposition ermittelt, welche wieder im Flugbahnrechner mit der Sollposition verglichen werden kann und so zu den erforderlichen Kräften und Momenten für die gewünschte Flugbewegungen des als Drohne ausgebildeten Flugkörpers führt.

Alle diese vorstehend beschriebenen Bauteile sind als Miniatur-Bauteile handelsüblich aus dem Modellflugzeugbau bekannt und daher der Einfachheit halber nicht im Einzelnen beschrieben und dargestellt.

Nach einem bevorzugten Ausführungsbeispiel der Erfindung beträgt die Länge der beschriebenen Drohne über alles 65 cm, der Durchmesser der Rumpfstruktur 6 cm, das Gesamtgewicht 1 kg. Die in Abhängigkeit der Kapazität der zu verwendenden Batterien mögliche Missionszeit beträgt 20 min und die durchschnittliche Missionsreichweite beträgt 1500 m. Die Rumpfstruktur, aerodynamische Flächen und Ruder bestehen vorzugsweise aus robustem geschäumten, alternativ aus faserverstärktem Kunststoff.

### BEZUGSZEICHENLISTE

- 10: Fluggerät
- 11: Rumpfstruktur
- 12: Lager
- 13: Propeller, Luftschraube
- 15: aerodynamische Flächen
- 16: Leitflächen
- 17: Ruder
- ?:
- 21: Heck
- 22: Leitstelle
- 23: Rudermaschine
- 24: Startstützen
- 30: batteriebetriebener Elektromotor

## Patentansprüche

1. Verwendung eines Fluggerätes (10), dessen Vortrieb mittels einer von einem batteriebetriebenen Elektromotor (30) angetriebenen frontseitigen Propeller (13) erfolgt, als ferngesteuerte Drohne ("Mini-Drohne), mit einer Rumpfstruktur (11) für die lösbare Aufnahme aerodynamischer Flächen (15) und Ruder (17), als Träger für einen eine Dreiachseninertialplattform umfassenden Autopiloten, für mindestens eine TV-Kamera (23) sowie für den Antrieb und die Bauteile für eine Funkfernsteuerung (33, 34, 35, 36, 37, 38), mittels der von einer die über die TV-Kameras (23) aufgenommenen Fernsehbilder darstellenden Leitstelle (38) aus das Fluggerät (10) sowohl für einen Marsch- und Schwebeflug als auch für die Transitionsphase steuerbar ist.

2. Fluggerät nach Anspruch 1, **dadurch gekennzeichnet, dass** die Rumpfstruktur (11) ein rohrförmiger Körper aus Kunststoff ist, dessen vordere Stirnseite einen Propeller (13) trägt, der von einem als Antriebsaggregat dienenden Elektromotor (30) angetrieben ist, welcher im vorderen Drittel der Rumpfstruktur angeordnet ist und mit mindestens einer als schwenkbare Lateral-Kamera ausgebildeten Fernsehkamera (23), mit einem eine Inertialplattform aufweisenden Autopiloten (34) mit Sende- und Empfangselektronik (33) im mittleren Drittel, sowie in dessen hinteren Drittel von Aktuatoren (36) betätigbare Ruder (17) angeordnet sind.

3. Fluggerät nach Anspruch 2, **dadurch gekennzeichnet, dass** die aerodynamischen Flächen (15) rechtwinklig dazu angeordnete Leitflächen (16) tragen.

4. Leitstelle für das Fluggerät gemäß Patentanspruch 1, **dadurch gekennzeichnet, dass** die für eine Marschflug - und für eine Schwebeflug-Mission dienenden Positions- und/oder Geschwindigkeitsvorgaben als getrennte (35, 37), über die Leitstelle (38) abrufbare Steuerkommandofolgen ausgebildet sind.

5. Leitstelle nach Anspruch 4, **dadurch gekennzeichnet, dass** die Geschwindigkeitsvorgaben in der Leitstelle (38) mittels Handstellmittel in Abhängigkeit der in die Leitstelle übertragenden, von der TV-Kamera des Fluggeräts (10) aufgenommenen Fernsehbilder veränderbar sind.

6. Leitstelle nach Anspruch 4, **dadurch gekennzeichnet, dass** von der Leitstelle aussendbare Steuersignale mittels Missionsplanung der Flugmission des Fluggerätes vorbestimmbar sind.

7. Fluggerät nach den Ansprüchen 1 bis 3, **dadurch gekennzeichnet, dass** die aerodynamischen Flügel (15) über Steckverbindungen und die Ruder (17) mittels je einer von der zugeordneten Rudermaschine beeinflussbare Steckverbindung mit der Rumpfstruktur (11) lösbar verbunden sind, dass der Propeller (13) als Faltpropeller ausgebildet ist und dass für den Start des Fluggerätes (10) mit den aerodynamischen Flächen (15) verbindbare Startstützen (24) vorgesehen sind, dies alles in derartiger Anordnung, dass das Fluggerät (10) im nicht zusammengesteckten Zustand in einem Transportkoffer unterbringbar ist.
